# EUROPÄISCHE PATENTSCHRIFT

(11) **EP 1 225 745 B1**
(45) Veröffentlichungstag und Bekanntmachung des Hinweises auf die Patenterteilung: **09.11.2005**
(21) Anmeldenummer: 01130793.1
(22) Anmeldetag: 22.12.2001
(51) Int. Cl.: H04L 29/06, H04L 29/12, H04L 12/28

(54) **Verfahren zur Informationsabfrage aus einer Dienstezentrale**
Method for requesting information from a service center
Procédé pour la demande d' informations à une centrale de services

(30) Priorität: 16.01.2001 DE 10101653
(43) Veröffentlichungstag der Anmeldung: 24.07.2002
(73) Patentinhaber: TEGARON Telematics GmbH, 53121 Bonn (DE)
(72) Erfinder: Beyer, Rolf, 53639 Königswinter (DE)
(74) Vertreter: Deuschel, Wilhelm

(56) Entgegenhaltungen:
- WO-A-01/03368
- WAP FORUM: "WAP WSP: Wireless Application Protocol - Wireless Session Protocol Specification" WAP FORUM STANDARD, [Online] 4. Mai 2000 (2000-05-04), Seiten 1-122, XP002255985 Gefunden im Internet: <URL:http://www1.wapforum.org/tech/documen ts/WAP-203-WSP-20000504-a.pdf> [gefunden am 2003-09-29]
- KOVACS E ET AL: "Adaptive mobile applications over cellular advanced radio" PIRMC 2000 CONTRIBUTION, Bd. 2, 18. September 2000 (2000-09-18), Seiten 1027-1031, XP010520790
- LIN XU ET AL: "DRIVE-ing to the internet: dynamic radio for IP services in vehicular environments" IEEE LCN 2000 CONTRIBUTION, 8. November 2000 (2000-11-08), Seiten 281-289, XP010527447
- MOUREU L: "Impact of location-based services on the mobility market" ALCATEL TELECOMMUNICATIONS REVIEW, [Online] 30. Juni 2000 (2000-06-30), Seiten 1-6, XP002255986 Gefunden im Internet: <URL:http://pddocserv/specdocs/data/compan y_disclosures/alcatel_telecommunications_r evues/2000/2Q2000/01mougb.pdf> [gefunden am 2003-09-29]
- ERTICO: "GSM-based ITS Services - ERTICO strategy for implementation" ERTICO CONTRIBUTION, [Online] 30. April 1998 (1998-04-30), Seiten 1-10, XP002255987 Gefunden im Internet: <URL:http://www.tongji.edu.cn/~yangdy/its/ ERTICO/gsm_its.pdf> [gefunden am 2003-09-29]

## Beschreibung

Die Erfindung bezieht sich auf ein Verfahren zur Abfrage von Informationen aus einer Dienstezentrale in einem Datennetzwerk über ein oder mehrere Endgeräte nach dem Oberbegriff des Anspruchs 1.

Ein Verfahren dieser Art ist in der Patentschrift DE 197 02 895 C1 für ein Mobilfunknetz mit einer Informationszentrale und Mobilfunktelefonen offenbart, die sich speziell in Straßenfahrzeugen befinden können. In diesem Fall bedient das Mobilfunknetz ein Verkehrstelematiksystem, das von Fahrzeugen aus über das jeweilige Mobiltelefon eine Anfrage nach Verkehrsinformationen von einer Verkehrsinformationszentrale ermöglicht. Das Mobilfunknetz beinhaltet einen Gesprächskanal und einen davon getrennten Datenkanal sowie ein Zusatzgerät für das jeweilige Mobiltelefon. Vom Zusatzgerät aus wird der Informationszentrale über den Datenkanal eine anfragende Datenmitteilung übermittelt, die mindestens eine die momentane Ortsposition des Zusatzgerätes repräsentierende Ortsinformation beinhaltet. Die Zentrale ermittelt anhand der Datenmitteilung die vom Benutzer gewünschten Informationen und sendet über den Datenkanal eine Antwort zurück, die anzeigt, ob relevante Informationen für den Benutzer vorliegen, und wenn ja, unter welcher Abrufadresse diese akustisch abfragbar sind. Eine Steuereinrichtung des Zusatzgerätes stellt dann selbsttätig über den Gesprächskanal eine Sprachverbindung zur Zentrale unter Übermittlung der Abrufadresse her. Dazu kann eine Codierung als Telefonnummererweiterung nach Art einer Nebenstelle vorgesehen sein oder das DTMF ("dual tone multiple frequency")-Verfahren zur akustischen Mitteilung der Abrufadresse nach Aufbau der Sprachverbindung benutzt werden.

"WAP WSP, Approved Version 4-May-2000: Wireless Application Protocol - Wireless Session Protocol Specification"; WAP Forum; offenbart die auf dem WAP Standard basierende Abfrage von Informationen aus einer Dienstezentrale über mehrere Kommunikationskanäle, wobei abfrageinformationsspezifische Daten über einen Anfragekanal übertragen werden, die Dienstezentrale von den nutzer- und abfrageinformationsspezifischen Daten spezifizierte Abfrageinformationen unter einer zugeordneten Abrufadresse über einen Abrufkanal bereitstellt und als Abrufadresse eine temporär gültige Netzwerkadresse genutzt wird.

"Adaptive mobile applications over cellular advanced radio"; Kovacs, Keller, Lohmar, Kroh und Held; offenbart im Rahmen des COMCAR-Projekts weitere Verfahren zur Informationsabfrage aus einer Dienstezentrale über mehrere Kommunikationskanäle.

Der Erfindung liegt die Aufgabe zugrunde, ein Informationsverfahren der eingangs genannten Art bereitzustellen, das die beschriebenen technischen Probleme bekannter Verfahren vermeidet. Insbesondere soll der flexible Gebrauch mehrerer im Datennetzwerk vorhandener Kommunikationskanäle erlaubt und bei Bedarf zusätzlich das Abrufen umfangreicherer Informationen über entsprechend breitbandige Kommunikationskanäle ermöglicht werden.

Die Erfindung löst diese Aufgabe durch die Bereitstellung eines Informationsabfrageverfahrens mit den Merkmalen des Anspruchs 1. Bei diesem Verfahren ist als Abrufadresse eine temporär gültige Netzwerkadresse, die spätestens nach einer vorgegebenen Zeitspanne für diese Abfrage ungültig gewacht wird, in einem über mehrere Abrufkanäle allgemein zugänglichen Netzwerkteil vorgesehen. Dort stellt die Dienstezentrale die Abfrageinformationen, d.h. die gewünschten, angefragten Informationen in Abhängigkeit von den über den Abfragekanal übermittelten Nutzer- und Abfraginformationen Daten zusammen bzw. zur Verfügung. Das Abrufen der gewünschten Informationen erfolgt dann vom Endgerät über einen der mehreren, vom jeweiligen Anfragekanal getrennten Abrufkanäle des Datennetzwerkes, wobei der Abrufkanal je nach Wunsch des Benutzers, Art der gewünschten Informationen und /oder Ausstattung des Endgerätes geeignet flexibel gewählt werden kann.

Erfindungsgemäß können somit anfragende Endgeräte einen beliebigen verfügbaren Abrufkanal für den Informationsabruf wählen, abhängig von der Ausstattung des Endgeräts auch breitbandige Übertragungskanäle, wie sie in den zukünftigen Mobilfunk verfügbar sein werden. Dem Nutzer können von der Dienstezentrale am Endgerät auch große Informationsmengen zur Verfügung gestellt werden, die z.B. die Form von interaktiven Abläufen haben können. Da die gewünschten Informationen über das Datennetzwerk abgerufen werden, braucht die Dienstezentrale keine eigene Datenübertragungs-Infrastruktur für diesen Zweck aufzubauen, d.h. die Informationsabfrage ist aus Sicht der Zentrale unabhängig vom Transportmedium.

In den vorteilhaften Weiterbildungen der Erfindung nach Anspruch 6 und 7 werden der Dienstezentrale bei der Anfrage auch Nutzeridentifikationsdaten übermittelt, die von dieser dazu genutzt werden, die Zugangsberechtigung des anfragenden Endgerätes bzw. des zugehörigen Systemnutzers zu überprüfen und/oder die für die Abfrage der gewünschten Informationen gegebenenfalls fälligen Nutzergebühren zu ermitteln, z.B. für eine automatische Gebührenabrechnung.

In einer Weiterbildung der Erfindung nach Anspruch 9 wird vom Internet als Datennetzwerk Gebrauch gemacht. Die Dienstezentrale verfügt in diesem Fall über einen Internet-Server, auf dem sie die gewünschten Informationen in Form von Internetseiten bereitstellt, die bei Bedarf selbstausführende Programme halten können.

Ein nach Anspruch 10 weitergebildetes Verfahren eignet sich innerhalb eines vernetzten Verkehrstelematiksystems beispielsweise dazu, für mit systemzugehörigen Endgeräten bestückte Fahrzeuge auf Anfrage Verkehrsinformationen in der Dienstezentrale zu erstellen und an die betreffenden Fahrzeuge zu übermitteln. Dazu kann die Dienstezentrale, die ihm bei der Anfrage übermittelte Endgerät-Ortsinformation nutzen, d.h. die Information über den momentanen Ort des Endgerätes und damit des zugehörigen Fahrzeugs.

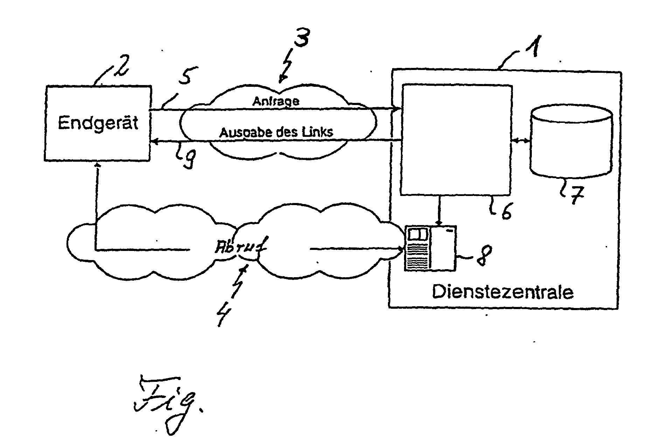

Eine vorteilhafte Ausführungsform der Erfindung ist in der Zeichnung dargestellt und wird nachfolgend beschrieben.
Die einzige Figur zeigt ein schematisches Blockdiagramm zur Veranschaulichung eines Informationsabfrageverfahrens mit Anfragekanal und davon getrenntem Abrufkanal.

In der Figur sind ein hier interessierender Teil eines Datennetzwerks und das von diesem durchführbare Informationsabfrageverfahren veranschaulicht. Das Netzwerk beinhaltet eine Dienstezentrale 1, an die mehrere Endgeräte, von denen stellvertretend ein Endgerät 2 gezeigt ist, über jeweils zwei oder mehr Kommunikationskanäle 3, 4 angeschlossen bzw. anschließbar sind.

Das implementierte Informationsabfrageverfahren ermöglicht eine individuelle Abfrage von Informationen aus der Dienstezentrale 1 über ein jeweiliges Endgerät 2 durch folgende Vorgehensweise. Zunächst wird vom Systemnutzer am jeweiligen Endgerät 2 ein Informationsanfragevorgang durchgeführt, der das Übermitteln einer Informationsanfrage 5 über einen zugehörigen Anfragekanal 3 vom Endgerät 2 zur Dienstezentrale 1 beinhaltet. Die Informationsanfrage 5 beinhaltet nutzer- und abfrageinformationsspezifische Daten, insbesondere Daten zur Identifikation des Systemnutzers und über den gewünschten Inhalt der Abfrageinformationen.

Eine Rechnereinheit 6 innerhalb der Dienstezentrale 1 wertet die in der Informationsanfrage 5 enthaltenen Daten geeignet aus. Dies umfasst zum einen die Gewinnung der durch die abfrageinformationsspezifischen Daten spezifizierten, gewünschten Informationen und zum anderen eine Zugangsberechtigungsprüfung und/oder Nutzergebührenabrechnung. Für die Zugangsberechtigungsprüfung beinhalten die Informationsanfragedaten geeignete Nutzeridentifikationsdaten, die mit Identifikationsdaten berechtigter Benutzer verglichen werden, welche in einer Kundendatenbank 7 der Dienstezentrale 1 abgespeichert sind. Die Nutzergebührenabrechnung kann z.B. eine nutzungsabhängige Gebührenermittlung und die Maßnahme beinhalten, die ermittelten Gebühren dem Nutzer in Rechnung zu stellen. Bei Bedarf kann vorgesehen sein, die anfallenden Gebühren dem Nutzer schon beim Abruf der Informationen in Rechnung zu stellen.

Sobald die Rechnereinheit 6 die gewünschten Informationen zusammengestellt hat, macht sie diese unter einer zu diesem Zweck als temporär eingerichteten Netzwerkadresse zum Abrufen verfügbar. Beispielhaft ist in der Figur der Fall gezeigt, dass es sich bei dem Datennetzwerk um das Internet handelt und die Dienstezentrale 1 über einen entsprechenden Internet-Server 8 verfügt, auf dem die Rechnereinheit 6 die gewünschten Informationen unter der gewählten, temporär gültigen Netzwerkadresse bereitstellt. Bei den auf dem Server 8 bereitgestellten Informationen kann es sich z.B. um Dateien handeln, welche die Form von Internet-Seiten haben, die selbstausführende Programme enthalten können. Gleichzeitig sendet die Rechnereinheit 6 über den Anfragekanal 3 an das Endgerät 2 eine zugehörige Adresseninformation 9 zurück, d.h. die Information über die als temporär gültig eingerichtete Netzwerkadresse, im gezeigten Beispiel eines entsprechenden Internet-Link.

Nach Erhalt dieser Antwortmeldung kann vom Endgerät 2 aus die gewünschte Information vom Server 8 über einen vom Anfragekanal 3 getrennten Abrufkanal 4 abgerufen werden. Der Abrufkanal 4 kann vom Endgerät 2, wenn mehrere in Betracht kommende Abrufkanäle im Datennetzwerk vorhanden sind, beliebig aus diesen ausgewählt werden. Vorzugsweise ist der jeweilige Abrufkanal 4 breitbandig ausgelegt, z.B. in Form eines breitbandigen Mobilfunkkanals der Standardtypen GSM-GPRS oder UTMS, so dass auch umfangreiche Informationen problemlos vom Server 8 abgerufen werden können. Demgegenüber reicht für den bidirektionalen Anfragekanal 3 eine schmalbandige Auslegung aus, da nur geringe Informationsmengen ausgetauscht werden. Beispielsweise eignen sich für den Anfrage- und Antwortvorgang heutzutage verfügbare Mobilfunk-Datenübertragungstechniken, wie ein SMS("Short Message Service")- oder WAP("Wireless Application Protocol")-Kanal.

Die Dienstezentrale 1 löscht nach einer gewissen Zeit die nur temporär für die spezielle Abfrageaktion als gültig erstellte Abrufadresse. Zusätzlich oder alternativ kann vorgesehen sein, die gültige Abrufadresse dann zu löschen, wenn die Dienstezentrale 1 den vollständigen Abruf der bereitgestellten Informationen registriert hat.

Das Informationsabfrageverfahren lässt sich auch in vernetzten Verkehrstelematiksystemen verwenden, um beispielsweise Verkehrsinformationen für Fahrzeuge bereitzustellen. In diesem Fall fungiert die Dienstezentrale 1 als eine Verkehrszentrale, und die Endgeräte 2 befinden sich im jeweiligen Fahrzeug. Die Informationsanfrage 5 enthält dann zusätzlich eine Information über den momentanen Aufenthaltsort des Endgerätes 2 und damit des betreffenden Fahrzeugs, so dass die Dienstezentrale 1 speziell für diesen Ort relevante Verkehrsinformationen, z.B. über die Verkehrslage und/oder empfehlenswerte Routen, bereitstellen kann, die dann fahrzeugseitig über das Endgerät 2 abgerufen werden können. Die Ortsinformation kann z.B. in Form von GPS("Global Positioning System")-Daten oder transformierten Wegenetzzellen-Identifikationsdaten in der Informationsanfrage 5 enthalten sein. Im übrigen kann heutzutage verfügbare Verkehrs-telematik-Infrastruktur genutzt werden.

Wie anhand des oben beschriebenen Ausführungsbeispiels deutlich wird, hat das erfindungsgemäße Informationsabfrageverfahren mit divergenten Übertragungswegen, d.h. einem Anfragekanal und einem davon verschiedenen Abrufkanal, mehrere Vorteile. Anfragende Endgeräte können einen beliebigen Abrufkanal für den Informationsabruf wählen, wobei abhängig von der Ausstattung des Endgeräts breitbandige Übertragungskanäle genutzt werden können, wie sie z.B. im Mobilfunk zukünftig verfügbar sein werden. Die Dienstezentrale braucht keine Infrastruktur für die Übertragungskanäle aufbauen, da der Informationsabruf über das Netzwerk, z.B. das Internet, erfolgt und daher aus Sicht der Zentrale unabhängig vom Transportmedium ist. Dadurch besteht beispielsweise die Möglichkeit, dass bestehende Dienstezentralen nach GATS("Global Automotive Telematic Standard")-Standard mit herkömmlichen, bewährten Verschlüsselungs- und Abrechnungsverfahren die Dienstenutzung unter Nutzung von Standard-Kommunikationskanälen regulieren, wie SMS oder den WAP/Bearer-Service in GSM. Dem Nutzer bzw. Kunden können von der Dienstezentrale auch große Informationsmengen zur Verfügung gestellt werden, die gegebenenfalls auch die Form von interaktiven Abläufen haben können.

## Patentansprüche

1. Verfahren zur Abfrage von Informationen aus einer Dienstezentrale (1) in einem Datennetzwerk über ein oder mehrere Endgeräte (2), die jeweils über mehrere Kommunikationskanäle mit der Dienstezentrale in Verbindung stehen, bei dem
• von einem jeweiligen Endgerät aus ein Informationsanfragevorgang durchgeführt wird,
• bei dem Informationsanfragevorgang nutzer- und abfrageinformationsspezifische vom Endgerät Daten über einen als Anfragekanal fungierenden ersten Kommunikationskanal zur Dienstezentrale übertragen wird,
• die Dienstezentrale von der Anfrage spezifizierte Abfrageinformation zum Abruf unter einer zugeordneten Abrufadresse über einen als Abrufkanal fungierenden zweiten Kommunikationskanal bereitgestellt,
• die Dienstezentrale die Abrufadresse über den Anfragekanal an das Endgerät übermittelt
• und das Endgerät die Abfrageinformationen über einen Abrufkanal unter der Abrufadresse abruft,
**dadurch gekennzeichnet, dass**
• als Abrufadresse eine temporär gültige Netzwerkadresse in einem Netzwerkteil, das über mehrere vom Abfragekanal getrennte Abruflcanäle zugänglich ist, gewählt wird,
• für die Übertragung einer der Abrufkanäle ausgewählt wird und
• die temporär gültige Netzwerkadresse spätestens nach einer vorgegeben Zeitspanne für diese Abfrage ungültig gemacht wird.

2. Verfahren nach Anspruch 1,
**dadurch gekennzeichnet, dass** temporär gültige Netzwerkadresse gelöscht wird, sobald registriert wurde, dass die abgefragten Informationen vollständig übertragen wurden.

3. Verfahren nach Anspruch 1 oder Anspruch 2,
**dadurch gekennzeichnet, dass** die Auswahl eines Abrufkanals (4) vom Endgerät (2) vorgenommen wird.

4. Verfahren nach einem der Ansprüche 1 bis 3,
**dadurch gekennzeichnet, dass** die Auswahl eines Abruflcanals (4) vom Endgerät (2) vorgenommen wird.

5. Verfahren nach nach einem der Ansprüche 1 bis 4,
**dadurch gekennzeichnet, dass** die Anfrage zusätzlich Daten zur Identitizierung des Nutzers umfaßt.

6. Verfahren nach Anspruch 5,
**dadurch gekennzeichnet, dass** die Daten zur Nutzer-Identifikation von der Dienstezentrale (1) für eine Nutzergebührenermittlung herangezogen werden.

7. Verfahren nach Anspruch 6,
**dadurch gekennzeichnet, dass** eine Maßnahme ausgelöst wird, die dem Nutzer die ermittelten Nutzergebühren in Rechnung zu stellen.

8. Verfahren nach Anspruch 4 oder Anspruch 5,
**dadurch gekennzeichnet, dass** Daten zur Nutzer- bzw. Endgerät-Identifizierung von der Dienstezentrale (1) für eine Zugangsberechtigung herangezogen werden.

9. Verfahren nach einem der Ansprüche 1 bis 8,
**dadurch gekennzeichnet, dass** als Datennetz das Internet verwendet wird und die Dienstezentrale (1) die Abfraginformation auf einem Internet-Server derselben in Form von Intemetseiten bereitstellt.

10. Verfahren nach einem der Ansprüche 1 bis 9,
**dadurch gekennzeichnet, dass** es in einem vernetzten Verkehrs-Telematik-System verwendet wird und die Anfrage eine Endgeräte-Ortinformation umfassen.

11. Verfahren nach einem der Ansprüche 1 bis 10,
**dadurch gekennzeichnet, dass** mindestens ein Abrufkanal (4) ein breitbandiger Mobilfunkkanal ist.

## Claims

1. Method for querying information from a service center (1) in a data network via one or more terminals (2), each of which terminals is connected to the service center by multiple communications channels, wherein
• an information query transaction is carried out with any given terminal as the starting point,
• during the information query transaction, data specific to the user and query information are transmitted from the terminal to the service center through a first communications channel functioning as a query channel,
• the service center makes query information specified by the query available for retrieval at an associated retrieval address through a second communications channel functioning as a retrieval channel,
• the service center transmits the retrieval address to the terminal through the query channel
• and the terminal retrieves the query information through a retrieval channel at the retrieval address,
**characterized in that**
• a temporarily valid network address, in a network segment that is accessible through multiple retrieval channels separate from the query channel, is selected as the retrieval address,
• one of the retrieval channels is selected for the transmission, and
• the temporarily valid network address is made invalid no later than the expiration of a predetermined time period for this query.

2. Method according to claim 1,
**characterized in that** temporarily valid network addresses are deleted as soon as it has been detected that the queried information has been completely transmitted.

3. Method according to claim 1 or claim 2,
**characterized in that** the selection of a retrieval channel (4) is performed by the terminal (2).

4. Method according to any one of claims 1 through 3,
**characterized in that** the selection of a retrieval channel (4) is performed by the terminal (2).

5. Method according to any one of claims 1 through 4,
**characterized in that** the query additionally includes data for identifying the user.

6. Method according to claim 5,
**characterized in that** the data for user identification are used by the service center (1) to determine user charges.

7. Method according to claim 6,
**characterized in that** a measure is initiated to bill the determined user charges to the user.

8. Method according to claim 4 or claim 5,
**characterized in that** the data for user identification or terminal identification are used by the service center (1) for access authorization.

9. Method according to any one of claims 1 through 8,
**characterized in that** the Internet is used as the data network and the service center (1) makes the query information available in the form of Internet pages on an Internet server of said service center (1).

10. Method according to any one of claims 1 through 9,
**characterized in that** said method is used in a networked traffic telematics system and the queries include terminal location information.

11. Method according to any one of claims 1 through 10,
**characterized in that** at least one query channel (4) is a broadband mobile radio channel.

## Revendications

1. Procédé de consultation d'informations provenant d'une centrale de services (1) dans un réseau de données, à l'aide d'un ou plusieurs terminaux (2) raccordés à la centrale de services par plusieurs canaux de communication, dans lequel
• une consultation d'informations est effectuée à partir d'un terminal,
• lors de la consultation d'informations, des données spécifiques à l'usager et à l'information de consultation sont transmises par le terminal à la centrale de services à l'aide d'un premier canal de communication servant de canal de demande,
• la centrale de services fournit une information de consultation spécifiée par la demande, pour retrait sous une adresse de retrait assignée, à l'aide d'un deuxième canal de communication servant de canal de retrait,
• la centrale de services transmet l'adresse de retrait au terminal à l'aide du canal de demande,
• et le terminal retire les informations de consultation par un canal de retrait sous l'adresse de retrait,
**caractérisé en ce que**
• est choisie comme adresse de retrait une adresse de réseau à validité temporaire dans un réseau accessible par plusieurs canaux de retrait séparés du canal de consultation,
• l'un des canaux de retrait est choisi pour la transmission et
• l'adresse de réseau à validité temporaire est invalidée pour cette consultation au plus tard à l'issue d'un intervalle de temps préétabli.

2. Procédé selon la revendication 1,
**caractérisé en ce que** l'adresse de réseau à validité temporaire est effacée dès qu'il a été enregistré que les informations consultées ont été transmises dans leur totalité.

3. Procédé selon l'une des revendications 1 ou 2,
**caractérisé en ce que** le choix d'un canal de retrait (4) est effectué par le terminal (2).

4. Procédé selon l'une des revendications 1 à 3,
**caractérisé en ce que** le choix d'un canal de retrait (4) est effectué par le terminal (2).

5. Procédé selon l'une des revendications 1 à 4,
**caractérisé en ce que** la demande comprend en plus des données servant à l'identification de l'usager.

6. Procédé selon la revendication 5,
**caractérisé en ce que** la centrale de services (1) a recours aux données servant à l'identification de l'usager aux fins du calcul des taxes à facturer à l'usager.

7. Procédé selon la revendication 6,
**caractérisé en ce qu'**une mesure est déclenchée par laquelle les taxes calculées sont facturées à l'usager.

8. Procédé selon l'une des revendications 4 ou 5,
**caractérisé en ce que** la centrale de services (1) a recours aux données servant à l'identification de l'usager ou du terminal à des fins d'autorisation d'accès.

9. Procédé selon l'une des revendications 1 à 8,
**caractérisé en ce que** l'Internet est utilisé comme réseau de données et la centrale de services (1) fournit les informations de consultation sous forme de pages Internet sur un serveur Internet lui appartenant.

10. Procédé selon l'une des revendications 1 à 9,
**caractérisé en ce qu'**il est utilisé dans un système télématique de trafic en réseau et **en ce que** la demande comprend une information sur le lieu où se trouve le terminal.

11. Procédé selon l'une des revendications 1 à 10,
**caractérisé en ce qu'**au moins un canal de retrait (4) est un canal mobile à haut débit.
